# EUROPÄISCHE PATENTANMELDUNG

(11) **EP 1 435 439 A1**
(43) Veröffentlichungstag der Anmeldung: **07.07.2004**
(21) Anmeldenummer: 03090449.4
(22) Anmeldetag: 19.12.2003
(51) Int. Cl.: F01N 3/08, F01N 3/20, F02B 37/12, F02C 6/12, F02D 41/30

(54) **Abgasanlage einer Verbrennungskraftmaschine ohne Vorkatalysator und Verfahren zur Behandlung eines Abgases der Verbrennungskraftmaschine**

(30) Priorität: 27.12.2002 DE 10261909; 30.01.2003 DE 10304205
(71) Anmelder: Volkswagen AG, 38436 Wolfsburg (DE)
(72) Erfinder: Pott, Ekkehard, Dr., 38518 Gifhorn (DE); Gnegel, Paul, 38165 Lehre (DE); Krebs, Rudolf, Dr., 38176 Wendeburg (DE); Senft, Peter, 38104 Braunschweig (DE); Langer, Manfred, 38518 Gifhorn (DE)
(74) Vertreter: Reinstädler, Diane

(57) **Zusammenfassung**

Die Erfindung betrifft eine Abgasanlage (10) einer fremdgezündeten und zumindest zeitweise magerbetriebenen Verbrennungskraftmaschine (12) mit mindestens einem in einem Abgasstrang (22) der Verbrennungskraftmaschine (12) motornah angeordneten NO_{X}-Speicherkatalysator (24) und mit zumindest einem abgasangetriebenen Ladeluftverdichter (32), der unter Absenkung einer Energie des den NOₓ-Speicherkatalysator (24) anströmenden Abgases eine Verdichtung einer der Verbrennungskraftmaschine (12) zuzuführenden Luft bewirkt, wobei eine Abgaslauflänge (L) zwischen der Verbrennungskraftmaschine (12) und dem motornächsten NO_{X}-Speicherkatalysator (24) in Abhängigkeit von der dem Abgas durch den Ladeluftverdichter (32) entzogenen Energiemenge gewählt ist.

Die Erfindung betrifft weiterhin ein Verfahren zur Behandlung eines Abgases einer fremdgezündeten und zumindest zeitweise magerbetriebenen Verbrennungskraftmaschine (12).

## Beschreibung

Die Erfindung betrifft eine Abgasanlage einer fremdgezündeten und zumindest mager betriebenen Verbrennungskraftmaschine sowie ein Verfahren zur Behandlung eines Abgases einer solchen Verbrennungskraftmaschine.

Zur Behandlung von Abgasen fremdgezündeter Verbrennungskraftmaschinen (Otto-Motoren), die aus Verbrauchsgründen zumindest zeitweise in einem mageren Betriebsmodus, das heißt mit Luftüberschuss (Lambda > 1) betrieben werden, ist bekannt, das Abgas durch nachgeschaltete NO_{X}-Speicherkatalysatoren zu leiten. NO_{X}-Speicherkatalysatoren lagern in mageren Betriebsphasen Stickoxide (NO_{X}) in Form von Nitrat ein und werden in zwischengeschalteten Regenerationsphasen bei Lambda ≤ 1 regeneriert. NO_{X}-Speicherkatalysatoren weisen neben der Speicherkomponente (üblicherweise ein Barium-Salz) auch eine katalytische Edelmetallkomponente auf, die eine Konvertierung von Schadstoffen des Abgases in umweltverträglichere Komponenten bewirkt.

NO_{X}-Speicherkatalysatoren werden üblicherweise in einer motorfernen Position angeordnet, wobei Abgaslauflängen von mindestens 500 mm zwischen einem Zylinderkopf der Verbrennungskraftmaschine und dem NO_{X}-Speicherkatalysator erforderlich sind, um eine ausreichende Abkühlung des Abgases zu erzielen. Dies ist zum einen wegen einer gegenüber 3-Wege-Katalysatoren eingeschränkten, thermischen Belastbarkeit der Speicherkatalysatoren erforderlich. Zudem soll eine häufige Beaufschlagung des Katalysators mit Abgastemperaturen oberhalb von 450 °C, insbesondere oberhalb von 500 °C, vermieden werden, da der Katalysator nur ein eingeschränktes Arbeitstemperaturfenster aufweist, in dem im Magerbetrieb eine NO_{X}-Speicherung erfolgt. Es kommt nämlich insbesondere im gemischten Verkehr mit abwechselnden Niedriglast-Magerbetriebsphasen und Hochlast-Homogenphasen (bei Lambda = 1) zu hohen Speicherkatalysator-Temperaturen, die im Magerbetrieb keine effiziente NO_{X}-Speicherung zulassen. Nachteilig an dieser motorfernen Anordnung des NO_{X}-Speicherkatalysators ist jedoch, dass die Lightoff-Temperatur des Katalysators, ab der eine Konvertierung und Einlagerung von Schadstoffen erfolgt, verzögert wird.

Infolgedessen erschwert der resultierende Schadstoffschlupf die Erfüllung strenger Abgas-Grenzwerte. Es ist daher üblich, dem Speicherkatalysator einen kleinvolumigen 3-Wege-Katalysator vorzuschalten, der die Konvertierung bis zum Lightoff des Speicherkatalysators übernimmt. Diese Maßnahme ist jedoch mit einem erhöhten Kostenaufwand verbunden.

Auf der anderen Seite ist bei stöchiometrisch betriebenen Verbrennungskraftmaschinen (Lambda=1-Motoren) seit langem bekannt, die hier eingesetzten 3-Wege-Katalysatoren in Form eines einzigen Hauptkatalysators in motornaher Anordnung, insbesondere mit einer Abgaslauflänge hinter dem Zylinderkopf von weniger als 400 mm, einzusetzen. Bei diesen Motoren ist eine NO_{X}-Speicherung nicht erforderlich, da im stöchiometrischen Abgas eine praktisch vollständige Konvertierung von Stickoxiden erfolgt. Als Folge der motornahen Anordnung des 3-Wege-Hauptkatalysators kann auf einen Vorkatalysator verzichtet werden, da die Lightoff-Temperatur des Hauptkatalysators in dieser Position auch für strenge Abgasgrenzwerte schnell genug erfolgt.

Aufgabe der vorliegenden Erfindung ist, eine Abgasanlage für magerlauffähige, fremdgezündete Verbrennungskraftmaschinen zur Verfügung zu stellen, die gegenüber bekannten NO_{X}-Speicherkatalysatoranordnungen konstruktiv vereinfacht und kostengünstiger ist, ohne jedoch Emissionsnachteile in Kauf zu nehmen. Es soll ferner ein Verfahren zur Abgasnachbehandlung einer solchen Verbrennungskraftmaschine vorgeschlagen werden.

Diese Aufgabe wird durch eine Abgasanlage mit den Merkmalen des Anspruches 1 sowie durch ein Verfahren nach Anspruch 15 gelöst.

Die erfindungsgemäße Abgasanlage umfasst einen, in einem Abgasstrang der Verbrennungskraftmaschine motornah angeordneten NO_{X}-Speicherkatalysator und zumindest einen Ladeluftverdichter, der unter Absenkung einer Energie des den Speicherkatalysator anströmenden Abgases eine Verdichtung einer, der Verbrennungskraftmaschine zuzuführenden Luft bewirkt. Dabei wird erfindungsgemäß eine Abgaslauflänge zwischen der Verbrennungskraftmaschine und dem NO_{X}-Speicherkatalysator in Abhängigkeit von der dem Abgas durch den Ladeluftverdichter entzogenen Energiemenge gewählt. Die Erfindung macht somit Gebrauch von an sich bekannten Ladeluftverdichtern, die eine Aufladung des Motors durch Nutzung der Abgasenergie bewirken, wobei eine Absenkung der Abgastemperatur eintritt. Diese Temperaturabsenkung gestattet die motornahe Anordnung des NO_{X}-Speicherkatalysators, ohne diesen thermisch zu stark zu belasten. Auf diese Weise ist es vorteilhaft möglich, auf einen dem NO_{X}-Speicherkatalysator vorgeschalteten Vorkatalysator zu verzichten. Es ist daher bevorzugt vorgesehen, dass zwischen einem Abgasaustritt der Verbrennungskraftmaschine und dem motornächsten NO_{X}-Speicherkatalysator kein weiterer Katalysator, insbesondere kein 3-Wege-Katalysator, angeordnet ist. Ausgenommen hiervon kann gegebenenfalls ein in einer Abgasrückführungsleitung angeordneter Katalysator sein. Die konkrete Anordnung des Speicherkatalysators wird dabei entsprechend der durch den Ladeluftverdichter hervorgerufenen Temperaturabsenkung realisiert.

Trotz des nicht vorhandenen Vorkatalysators ist die Einhaltung strenger Abgasnormen durch die erfindungsgemäße Abgasanlage möglich. Vorzugsweise ist vorgesehen, dass die Abgasanlage derart ausgelegt ist, dass das verlassende Abgas im Neuen Europäischen Fahrzyklus NEFZ bei einem ungeschädigten NO_{X}-Speicherkatalysator und einer gefeuerten Magerbetriebsdauer mit Lambda ≥ 1,15 innerhalb einer Zeitspanne von mindestens 250 s, insbesondere mindestens 350 s, eine HC-Emission von weniger als 0,07 g/km und eine NO_{X}-Emission von weniger als 0,05 g/km aufweist. Dabei wird unter einem ungeschädigten Katalysator ein frischer Katalysator verstanden, der thermisch nicht geschädigt ist und eine gespeicherte Schwefelmasse von maximal 0,02 g/l Katalysatorvolumen aufweist.

Erfindungsgemäß kommen jedenfalls solche Ladeluftverdichter zum Einsatz, die die Kompression der Ladeluft durch Nutzung von Abgasenergie bewirken. Dabei sind insbesondere Abgasturbolader geeignet, welche die Frischluftkompression über ein Verdichterrad bewirken, das durch ein seinerseits von dem Abgas angetriebenen Turbinenrad angetrieben wird. Dabei kommt es bei der hier erfolgenden Druckminderung des Abgases an der Turbine zu der gewünschten Temperaturabsenkung. Ebenfalls für die erfindungsgemäße Abgasanlage geeignet sind so genannte Comprex-Lader, bei denen Druck- und Saugwellen der pulsierenden Abgase Frischluft in direkter Berührung verdichten. Denkbar ist daneben jedoch auch die zusätzliche Verwendung anderer Ladeluftverdichter, bei denen die Verdichtung im Wesentlichen über mechanische oder elektrische Energie erfolgt.

Üblicherweise werden NO_{X}-Speicherkatalysatoren mindestens 500 mm hinter dem Zylinderkopf angeordnet. Demgegenüber befindet sich der Speicherkatalysator der erfindungsgemäßen Abgasanlage näher am Abgasaustrittsort. Insbesondere ist vorgesehen, den NO_{X}-Speicherkatalysator höchstens 400 mm, vorzugsweise höchstens 350 mm, stromab des Zylinderkopfs anzuordnen. In besonders vorteilhafter Ausgestaltung befindet sich der Katalysator höchstens 300 mm hinter dem Zylinderkopf. Im Falle der Luftverdichtung über einen Abgasturbolader beträgt die Abgaslauflänge zwischen einer Rotationsachse des beaufschlagenden Abgasturboladers und einer Stirnfläche des NO_{X}-Speicherkatalysators maximal 300 mm, insbesondere höchstens 250 mm, vorzugsweise höchstens 200 mm. Besonders bevorzugt sind hier Abgaslauflängen von höchstens 150 mm vorgesehen.

Die Abgaslauflänge kann umso weiter reduziert werden, je stärker die Abgastemperatur infolge der Funktion des Ladeluftverdichters abgesenkt wird. Daher kommt das erfindungsgemäße Konzept mit zunehmender Aufladung, das heißt zunehmender Verdichtung und Leistung der Verbrennungskraftmaschine als Folge der zunehmenden Entspannungsarbeit des Abgases besonders günstig zum Tragen. Besonders vorteilhaft sind daher Verbrennungskraftmaschinen mit einer spezifischen Leistung von mindestens 70, insbesondere mindestens 80, vorzugsweise mindestens 90, besonders bevorzugt mindestens 100 kW/l Motorhubvolumen. Ganz besonders vorteilhaft günstig ist dies bei Motoraggregaten nach so genannten Downsizing-Konzepten, bei denen ein fahrzeuggewichtsspezifischer Hubraum des aufgeladenen Motors höchstens 1,2, insbesondere höchstens 1,1, vorzugsweise höchstens 1,0, besonders bevorzugt höchstens 0,9 dm³/1000 kg Fahrzeugleergewicht beträgt.

Der Verbrauchsvorteil des Magerbetriebs, insbesondere des Schichtladebetriebs, ist insbesondere bei Motoraggregaten gemäß der vorstehenden Spezifikation auf den untersten Teillastenbereich beschränkt. Bei Drehzahlen n oberhalb von 0,3*n_{Nenn} und/oder bei Lasten pₘₑ oberhalb von 0,25*p_{me,max} sind allenfalls geringe Verbrauchsvorteile gegenüber dem Lambda=1-Betrieb erzielbar. In Folge der daher reduzierten Mager-Betriebszeiten sinken die Anforderungen an die NO_{X}-Speicherfähigkeit des Speicherkatalysators. Ein weiterer Kostenvorteil kann somit durch Reduzierung einer Speichermaterialmasse pro Speicherkatalysator gegenüber üblichen Katalysatoren erzielt werden. Besonders bevorzugt ist daher vorgesehen, NO_{X}-Speicherkatalysatoren einzusetzen, die nach Einlagerung einer NO₂-Masse von 200 mg pro Liter Katalysatorvolumen einen NO_{X}-Speicherwirkungsgrad von höchstens 95 %, insbesondere höchstens 90 %, vorzugsweise höchstens 80 % aufweisen. Diese relativ niedrigen Wirkungsgrade werden von heutigen NO_{X}-Speicherkatalysatoren erst nach einer eingelagerten NO₂-Masse von 500 mg/l Katalysatorvolumen erreicht. Demgegenüber weist der erfindungsgemäß ausgelegte Speicherkatalysator bei einer eingelagerten NO₂-Masse von 500 mg/l Katalysatorvolumen einen NO_{X}-Speicherwirkungsgrad von mindestens 80 %, insbesondere von mindestens 70 %, mindestens aber von 60 %. Im Ergebnis bedeutet dies, dass die Speichermaterialmasse des erfindungsgemäßen Katalysators gegenüber herkömmlichen Konzepten um mindestens 30 %, insbesondere um mindestens 50 %, vorzugsweise sogar um mindestens 70 % reduziert werden kann. Hieraus ergeben sich weitere Kosten- und Gewichtsvorteile. (Alle vorstehend angegebenen Wirkungsgrade beziehen sich auf eine Speicherleistung, die unmittelbar nach einer Regenerationsphase an einem NO_{X}-Speicherkatalysator im Frischzustand (ungebraucht, aber konditioniert) bei Beaufschlagung mit einem Abgas mit einer HC-Eingangskonzentration von maximal 100 ppm HC₃ und einer NO_{X}-Eingangskonzentration von 250-500 ppm bei einer mittleren Katalysatortemperatur von 350 ±20 °C, Lambda = 2,2 ±0,2 und einer Raumgeschwindigkeit von 40.000 ±20.000 h⁻¹ gemessen wurden. Siehe näher hierzu ein Ausführungsbeispiel unten.)

Eine weitere Reduzierung der Abgaslauflänge, das heißt eine noch motornähere Anordnung des NO_{X}-Speicherkatalysators, kann durch Verwendung von hochtemperaturfähigen Hauptspeicherkomponenten des NO_{X}-Speicherkatalysators erzielt werden. Dafür eignen sich grundsätzlich Alkali- und Erdalkalikomponenten, beispielsweise Barium, Kalium, Caesium, Natrium und/oder Magnesium, insbesondere Verbindungen und/oder Salze, vorzugsweise Carbonate und/oder Oxide von diesen. Besonders vorteilhaft können von diesen Elementen aufgrund ihrer Hitzebeständigkeit Verbindungen von Kalium, Caesium, Natrium und/oder Magnesium, vorzugsweise aber Verbindungen des Kaliums eingesetzt werden. Gegenüber heutigen Speicherkatalysatoren, die vorwiegend auf Barium-Basis arbeiten und ein Arbeitstemperaturfenster der NO_{X}-Speicherung im Magerbetrieb von 250 °C bis maximal 500 °C aufweisen, wird erfindungsgemäß ein Katalysator eingesetzt, dessen NO_{X}-Speichertemperaturfenster nach oben hin erweitert ist. Er weist eine obere Grenze des Temperaturfensters von mindestens 550 °C, insbesondere mindestens 580 °C, vorzugsweise mindestens 610 °C, besonders bevorzugt mindestens 640 °C auf. Eine solche Formulierung kommt besonders vorteilhaft bei Motoraggregaten mit den vorstehend beschriebenen spezifischen Leistungen und Hubräumen zum Tragen, wobei die oben angegebenen Abgasgrenzwerte im Neuen Europäischen Fahrzyklus eingehalten werden. Besonders vorteilhaft kann die Hochtemperaturformulierung auch in Zusammenhang mit der reduzierten Speichermaterialmasse eingesetzt werden.

Es ist ferner vorteilhaft möglich, einen Edelmetallgehalt des NO_{X}-Speicherkatalysators gegenüber heute üblichen Katalysatoren abzusenken. Insbesondere werden gemäß der vorliegenden Erfindung Katalysatoren mit einem Edelmetallgehalt von höchstens 3,59 g/dm³ (100 g/ft³), vorzugsweise von höchstens 2,87 g/dm³ (80 g/ft³) eingesetzt. Demgegenüber stehen heute übliche Speicherkatalysatoren mit Edelmetallgehalten von mindestens 3,95 g/dm³ (110 g/ft³), häufiger sogar mit mindestens 4,67 g/dm³ (130 g/ft³). Eine solche Edelmetallreduzierung führt zu einem weiteren Kostenvorteil, ohne dass signifikante Einbußen der Schadstoffkonvertierung beobachtet werden.

Gemäß dem erfindungsgemäßen Verfahren wird das Abgas durch mindestens einen, in dem Abgaskanal der Verbrennungskraftmaschine motornah angeordneten NO_{X}-Speicherkatalysator geführt, mit zumindest einem Ladeluftverdichter eine Verdichtung einer der Verbrennungskraftmaschine zuzuführenden Luft bewirkt und eine hierfür erforderliche Energie durch Absenkung einer Energie des den NO_{X}-Speicherkatalysator anströmenden Abgases aufgebracht. Dabei wird eine Abgaslauflänge zwischen der Verbrennungskraftmaschine und dem NO_{X}-Speicherkatalysator in Abhängigkeit von der dem Abgas durch den Ladeluftverdichter entzogenen Energiemenge gewählt.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: eine Abgasanlage gemäß dem Stand der Technik und
- Figur 2: eine erfindungsgemäße Abgasanlage.

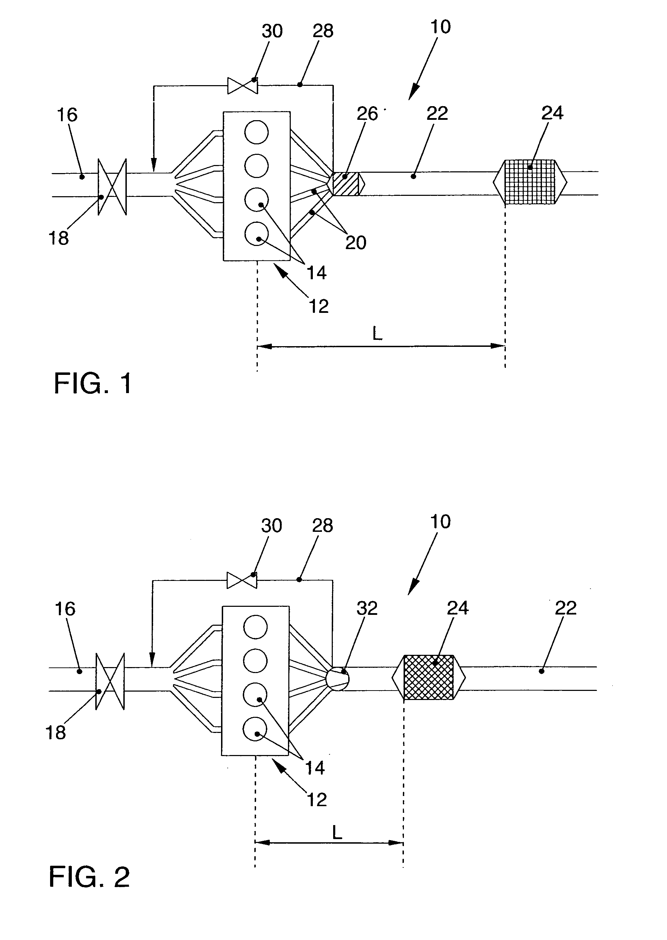

Figur 1 zeigt in schematischer Weise eine insgesamt mit 10 bezeichnete Abgasanlage, wie sie gemäß dem Stand der Technik für fremdgezündete, magerlauffähige Verbrennungskraftmaschinen 12 üblich ist. Die Verbrennungskraftmaschine 12 weist gemäß dem dargestellten Beispiel vier Zylinder 14 auf, die jeweils über ein gemeinsames Luftansaugrohr 16 mit Frischluft und damit mit Sauerstoff versorgt werden. Eine Regulation der Frischluftmenge erfolgt über eine in dem Luftansaugrohr 16 angeordnete, stellbare Drosselklappe 18.

Moderne, magerlauffähige Otto-Motoren 12 sind häufig noch mit einer hier nicht dargestellten Kraftstoffdirekteinspritzung ausgestattet. Diese sowie eine speziell ausgestaltete Brennraumgeometrie der Zylinder 14 ermöglicht, die Verbrennungskraftmaschine 12 im unteren und mittleren Lastbereich in einem so genannten Schichtlademodus zu betreiben, bei dem lediglich im Bereich einer Zündkerze eines Zylinders 14 eine zündfähige Gemischwolke dargestellt wird. Der Schichtladebetrieb ermöglicht einen besonders mageren und damit kraftstoffsparenden Betrieb der Verbrennungskraftmaschine 12.

Abgase, die die Zylinder 14 der Verbrennungskraftmaschine 12 über einen nicht dargestellten Zylinderkopf verlassen, werden über Krümmerrohre 20 in einen gemeinsamen Abgasstrang 22 geleitet.

Eine Abgasnachbehandlung erfolgt mit Hilfe des in dem Abgasstrang 22 angeordneten Katalysatorsystems 24 und 26. Dieses umfasst als Hauptkatalysator einen großvolumigen NO_{X}-Speicherkatalysator 24. Der NO_{X}-Speicherkatalysator 24 hat aufgrund seiner Edelmetallkomponenten eine katalytische Funktion zur Konvertierung von im Abgas enthaltenen Schadstoffen wie Kohlenmonoxid, unverbrannten Kohlenwasserstoffen und Stickoxiden. Er weist darüber hinaus auch eine NO_{X}-Speicherfunktion im Magerbetrieb der Verbrennungskraftmaschine 12 auf. Hierdurch werden im Magerbetrieb nicht vollständig konvertierbare Stickoxide üblicherweise an einer Barium-Speicherkomponente in Form von Nitrat gespeichert und in zwischengeschalteten kurzen Regenerationsphasen (bei Lambda ≤ 1) desorbiert und konvertiert.

Aufgrund seiner gegenüber 3-Wege-Katalysatoren erhöhten Temperaturempfindlichkeit sowie aufgrund eines begrenzten Temperaturfensters, in dem die Mager-NO_{X}-Speicherung erfolgen kann, befindet sich der NO_{X}-Speicherkatalysator 24 gemäß Stand der Technik an einer motorfernen Position im Abgasstrang 22, so dass über die Abgaslauflänge L eine ausreichende Abkühlung des Abgases stattfindet. Die motorferne Anordnung des NO_{X}-Speicherkatalysators 24 hat jedoch den Nachteil, dass er seine Mindest-Betriebstemperatur, den so genannten Lightoff, nach einem Motorkaltstart erst verzögert erreicht. Um einen hierdurch erzeugten Schadstoffschlupf zu minimieren, ist gemäß dem Stand der Technik üblich, einen kleinvolumigen Vorkatalysator 26, der in der Regel als 3-Wege-Katalysator ausgestaltet ist, an einer motornahen Position dem NO_{X}-Speicherkatalysator 24 vorzuschalten. Die Anordnung solcher Vorkatalysatoren 26 ist aber mit einem zusätzlichen Kostenaufwand verbunden.

Die Abgasanlage 10 umfasst ferner eine Abgasrückführungsleitung 28, mit der Abgase in das Luftansaugrohr 16 zurückgeführt und der Verbrennungskraftmaschine 12 erneut zugeführt werden. Eine Abgasrückführrate ist über ein Abgasrückführungsventil 30 einstellbar.

Figur 2 stellt ebenfalls stark vereinfacht eine Abgasanlage 10 gemäß einer bevorzugten Ausgestaltung der vorliegenden Erfindung dar. In Figur 2 werden gleiche Elemente mit den gleichen Bezugszeichen wie in Figur 1 bezeichnet.

Die erfindungsgemäße Abgasanlage 10 zeichnet sich durch die Abwesenheit eines Vorkatalysators sowie durch eine motornahe Anordnung des NOₓ-Speicherkatalysators 24 aus. Diese gegenüber dem Stand der Technik kostengünstige Konstellation wird ermöglicht, indem von der Funktionsweise an sich üblicher Luftladeverdichter in erfindungsgemäßer Weise Gebrauch gemacht wird. Obwohl der zusätzliche Einbau anderer Verdichter nicht ausgeschlossen ist, kommen erfindungsgemäß zumindest solche Luftladeverdichter zum Einsatz, die eine für die Luftverdichtung benötigte Energie dem Abgas entziehen, wobei eine Abgasenergie gesenkt und die Abgastemperatur reduziert wird. In Figur 2 ist beispielhaft ein Abgasturbolader 32 angedeutet. Abgasturbolader bestehen im Wesentlichen aus einem mit dem Abgas in Kontakt stehenden Turbinenrad, das über eine Welle mit einem Verdichterrad gekoppelt ist. Somit erfolgt die Luftverdichtung unter Ausnutzung der Energie des Abgases, welches das Turbinenrad antreibt. Eine am Turbinenrad stattfindende Entspannungsarbeit des Abgases sorgt für seine Abkühlung und gestattet die motornahe Anordnung des NOₓ-Speicherkatalysators. Gemäß dem in Figur 2 dargestellten Beispiel erfolgt die Ladeluftverdichtung nur mittelbar durch Verdichtung des durch die AGR-Leitung 28 rückgeführten Abgases. Selbstverständlich ist jedoch auch die Verdichtung der gesamten, der Verbrennungskraftmaschine 12 zugeführten Luftmasse in herkömmlicher Weise möglich.

Die konkrete Position des NO_{X}-Speicherkatalysators im Abgasstrang 22 ist in Abhängigkeit von der dem Abgas durch den Abgasturbolader 32 entzogenen Energiemenge, das heißt dem Grad der Abgasauskühlung, gewählt. Dabei beträgt die Abgaslauflänge L zwischen der hier nicht dargestellten Rotationsachse des Abgasturboladers 32 und einer Anströmfläche (Stirnfläche) des NO_{X}-Speicherkatalysators 24 vorzugsweise höchstens 200 mm, in besonders vorteilhafter Ausgestaltung sogar höchstens 150 mm.

Wie bereits oben erläutert, kommt die Erfindung besonders vorteilhaft bei hoch aufgeladenen Verbrennungskraftmaschinen nach dem Downsizing-Konzept zum Tragen. Die in Figur 2 dargestellte Verbrennungskraftmaschine 12 weist daher zusätzlich zu den zu Figur 1 erläuterten Merkmalen eine spezifische Leistung von mindestens 90, besonders bevorzugt von mindestens 100 kW/l Motorhubvolumen auf. Ferner beträgt ihr fahrzeuggewichtsspezifischer Hubraum höchstens 1,0, besonders bevorzugt höchstens 0,9 dm³/1000 kg Fahrzeugleergewicht.

Die motornahe Anordnung des NO_{X}-Speicherkatalysators 24 wird ferner durch eine gegenüber dem Stand der Technik abgewandelte Katalysatorauslegung und Formulierung der Basischemie ermöglicht. Insbesondere wird der Umstand der genannten besonderen Spezifikationen des Motoraggregates genutzt, wonach der Magerbetrieb, und ganz besonders der Schichtladebetrieb auf den untersten Teillastenbereich, insbesondere auf eine Drehzahl n = 0,3*n_{Nenn} und auf eine effektivere Leistung pₘₑ = 0,25*p_{me,max} begrenzt ist. Aufgrund des begrenzten Magerbetriebs sind die NO_{X}-Rohemissionen der Verbrennungskraftmaschine 12 geringer als in herkömmlichen Konzepten, so dass die Anforderung an die NOₓ-Speicherfähigkeit des NO_{X}-Speicherkatalysators 24 gesenkt sind. Aus diesem Grund kann eine Speichermaterialmasse des Speicherkatalysators 24 um mehr als 50 % gegenüber üblichen Formulierungen reduziert werden. Im bevorzugten Beispiel ist sie sogar um mehr als 70 % reduziert. Der bevorzugt verwendete NO_{X}-Speicherkatalysator 24 weist nach Einlagerung einer NO₂-Masse von 200 mg/l Katalysatorvolumen einen NO_{X}-Speicherwirkungsgrad von nur noch höchstens 80 % und nach Einlagerung von 500 mg/l Katalysatorvolumen nur von noch höchstens 70 %, mindestens aber 60 % auf, ohne zu unvertretbar hohen NO_{X}-Emissionen zu führen (siehe unten).

Der hier verwendete Speicherkatalysator 24 weist darüber hinaus einen gegenüber dem Stand der Technik reduzierten Edelmetallgehalt von maximal 2,87 g/dm³ (80 g/ft³) auf.

Ferner ist der Speicherkatalysator 24 mit einer hochtemperaturfähigen Basischemie ausgestattet. Dafür werden als Hauptspeicherkomponente statt Barium Verbindungen von Kalium als Basiskomponente verwendet.

### HC- und NO_{X}-Emission

Die Endemissionen des erfindungsgemäßen NO_{X}-Speicherkatalysators 24 lagen im Neuen Europäischen Fahrzyklus NEFZ im thermisch ungeschädigten Zustand und mit einer gespeicherten Schwefelmasse unterhalb von 0,2 g/l Katalysatorvolumen bei einer gefeuerten Magerbetriebsdauer (ohne Schubphasen) mit Lambda > 1,15 von zumindest 250 s, insbesondere sogar mindestens 350 s, unterhalb von 0,07 g/km für unverbrannte Kohlenwasserstoffe (HC) und unterhalb von 0,05 g/km für Stickoxide (NO_{X}).

Nach einer Ofenalterung des erfindungsgemäßen NO_{X}-Speicherkatalysators 24 für vier Stunden bei 1.100 °C in einer Atmosphäre mit 2 % O₂ und 10 % H₂O in demselben Fahrzeug im NEFZ wies dieser eine HC-Emission unterhalb von 0,1 g/km und eine NO_{X}-Emission unterhalb von 0,08 g/km auf.

### Ermittlung des NO_{X}- Speichertemperaturfensters

Die besondere Auslegung des Speicherkatalysators 24 gemäß der vorliegenden Erfindung erlaubt eine Erweiterung des NO_{X}-Speichertemperaturfensters im Magerbetrieb gegenüber heutigen Konzepten. Es ist daher vorgesehen, den Magerbetrieb, insbesondere den Schichtladebetrieb der Verbrennungskraftmaschine 12 bis zu Katalysatortemperaturen oberhalb von 600 °C, insbesondere oberhalb von 610 °C oder sogar 640 °C auszudehnen. Die untere Temperaturgrenze liegt dabei optimalerweise auf dem bisherigen Niveau von etwa 250 °C, kann jedoch aufgrund der anderen vorherrschenden Temperaturverhältnisse um 20 K, gegebenenfalls sogar um 50 K oder sogar um 70 K angehoben werden.

Das genaue NO_{X}-Speichertemperaturfenster eines konkreten NO_{X}-Speicherkatalysators 24 im Magerbetrieb muss für jede Katalysatorformulierung im Einzelnen ermittelt werden. Die Ermittlung erfolgt in einem alternierenden Mager-Fett-Betrieb, wobei der erfindungsgemäße Katalysator und ein beliebiger Katalysator des Standes der Technik an einem beliebigen schichtladefähigen, direkteinspritzenden Otto-Motor ebenfalls nach dem Stand der Technik betrieben werden.

Beide ungebrauchte Katalysatoren werden zunächst konditioniert, indem über vier Stunden bei einer mittleren Katalysatortemperatur von 650 ±30 °C eine Gasbeaufschlagung mit Lambda = 1 ±0,03, mit einem Sauerstoffanteil unterhalb von 1,5 % und bei einer Raumgeschwindigkeit von 20.000 ±5.000 h⁻¹ erfolgt. In diesem Zustand (= Frischzustand) werden beide Katalysatoren unmittelbar nach einer Regenerationsphase von mindestens 60 s bei Lambda > 0,9 bei einer Raumgeschwindigkeit von 40.000 ±20.000 h⁻¹ bei Lambda = 2,2 ±0,2 mit einer HC-Eingangskonzentration < 100 ppm HC₃ und einer NOₓ-Eingangskonzentration von 250 bis 500 ppm beaufschlagt.

Die Ermittlung der Abweichung des Temperaturfensters des erfindungsgemäßen Katalysators vom Katalysator gemäß dem Stand der Technik erfolgt derart, dass zunächst die Mindest- und Maximaltemperaturen ermittelt werden, bei denen der Katalysator gemäß dem Stand der Technik nach Einlagerung einer vorgegebenen NO₂-Masse von zum Beispiel 500 mg/l Katalysatorvolumen einen vorgegebenen NO_{X}-Speicherwirkungsgrad von beispielsweise 75 % aufweist. Anschließend werden für den erfindungsgemäßen Speicherkatalysator diejenigen Temperaturen ermittelt, bei denen nach Einlagerung derselben NO₂-Masse derselbe Speicherwirkungsgrad vorliegt. Diese Temperaturen werden dann als Mindest- und Maximaltemperaturen des NO_{X}-Speichertemperaturfensters für den Betrieb des erfindungsgemäßen NO_{X}-Speicherkatalysators verwendet.

### Messung des NO_{X}-Speicherwirkungsgrades

Der NO_{X}-Speicherwirkungsgrad im mageren Abgas erfindungsgemäß speicherreduzierter NO_{X}-Speicherkatalysatoren und eines herkömmlichen NO_{X}-Speicherkatalysators wurden wie folgt ermittelt. Die Speichermaterialmassen der getesteten Katalysatoren waren gegenüber den Speichermaterialmasse des herkömmlichen NO_{X}-Speicherkatalysators um etwa 30 %, 50 % beziehungsweise 70 % reduziert.

Zunächst wurden alle ungebrauchte Katalysatoren konditioniert, indem über vier Stunden bei einer mittleren Katalysatortemperatur von 650 ±30 °C eine Abgasbeaufschlagung bei Lambda = 1 ±0,03, mit einem Sauerstoffanteil unterhalb von 1,5 % O₂ im zuströmenden Abgas und bei einer Raumgeschwindigkeit von 20.000 ±5.000 h⁻¹ erfolgte. Anschließend wurde eine Regenerationsphase von mindestens 60 s bei Lambda < 0,9 durchgeführt.

Unmittelbar nach dieser Regenerationsphase erfolgte eine Beaufschlagung der NO_{X}-Speicherkatalysatoren mit einem Abgas mit einer HC-Eingangskonzentration von maximal 100 ppm HC₃ und einer NO_{X}-Eingangskonzentration von 250-500 ppm bei einer mittleren Katalysatortemperatur von 350 ±20 °C, Lambda = 2,2 ±0,2 und einer Raumgeschwindigkeit von 40.000 ±20.000 h⁻¹.

Nach Einlagerung einer NO₂-Masse von 200 mg pro Liter Katalysatorvolumen wiesen die speicherreduzierten Katalysatoren noch einen NO_{X}-Speicherwirkungsgrad von mindestens 95 % (Katalysator mit um 30 % reduzierter Speichermaterialmasse), mindestens 90 % (50 % Speichermaterialmasse) beziehungsweise mindestens 80 % (um 70 % reduzierte Speichermaterialmasse) auf. Nach Einlagerung einer NO₂-Masse von 500 mg/l Katalysatorvolumen wiesen die speicherreduzierten Katalysatoren einen NO_{X}-Speicherwirkungsgrad unterhalb von 80 % (Katalysator mit um 30 % reduzierter Speichermaterialmasse) beziehungsweise unterhalb von 70 % (50 % Speichermaterialmasse) auf. Alle speicherreduzierten Katalysatoren wiesen bei dieser Speicherfüllung aber noch einen Wirkungsgrad von mindestens 60 % auf. Im Vergleich hierzu hatte der NO_{X}-Speicherkatalysator gemäß Stand der Technik bei einer eingelagerten NO_{X}-Masse von 500 mg/l Katalysatorvolumen einen Speicherwirkungsgrad oberhalb von 95 %.

### BEZUGSZEICHENLISTE

- 10: Abgasanlage
- 12: Verbrennungskraftmaschine
- 14: Zylinder
- 16: Luftansaugrohr
- 18: Drosselklappe
- 20: Krümmerrohre
- 22: Abgasstrang
- 24: NO_{X}-Speicherkatalysator
- 26: Vorkatalysator
- 28: Abgasrückführungsleitung
- 30: Abgasrückführungsventil
- 32: Luftladeverdichter

- L: Abgaslauflänge

## Patentansprüche

1. Abgasanlage (10) einer fremdgezündeten und zumindest zeitweise magerbetriebenen Verbrennungskraftmaschine (12) mit mindestens einem in einem Abgasstrang (22) der Verbrennungskraftmaschine (12) motornah angeordneten NO_{X}-Speicherkatalysator (24) und mit zumindest einem abgasangetriebenen Ladeluftverdichter (32), der unter Absenkung einer Energie des den NO_{X}-Speicherkatalysator (24) anströmenden Abgases eine Verdichtung einer der Verbrennungskraftmaschine (12) zuzuführenden Luft bewirkt, wobei eine Abgaslauflänge (L) zwischen der Verbrennungskraftmaschine (12) und dem motornächsten NO_{X}-Speicherkatalysator (24) in Abhängigkeit von der dem Abgas durch den Ladeluftverdichter (32) entzogenen Energiemenge gewählt ist.

2. Abgasanlage nach Anspruch 1, **dadurch gekennzeichnet, dass** zwischen einem Abgasaustritt der Verbrennungskraftmaschine (12) und dem motornächsten NO_{X}-Speicherkatalysator (24) kein weiterer Katalysator, insbesondere kein 3-Wege-Vorkatalysator, angeordnet ist.

3. Abgasanlage nach einem der Ansprüche 1 oder 2, **dadurch gekennzeichnet, dass** der zumindest eine abgasangetriebene Ladeluftverdichter (32) ein Abgasturbolader ist.

4. Abgasanlage nach einem der Ansprüche 1 oder 2, **dadurch gekennzeichnet, dass** der zumindest eine abgasangetriebene Ladeluftverdichter (32) ein Comprex-Lader ist.

5. Abgasanlage nach einem der vorhergehenden Ansprüche, **dadurch gekennzeichnet, dass** die Abgaslauflänge (L) zwischen einem Zylinderkopf der Verbrennungskraftmaschine (12) und einer Anströmfläche des motornächsten NO_{X}-Speicherkatalysators (24) höchstens 500 mm, insbesondere höchstens 400 mm, vorzugsweise höchstens 350 mm, besonders bevorzugt höchstens 300 mm beträgt.

6. Abgasanlage nach einem der vorhergehenden Ansprüche, **dadurch gekennzeichnet, dass** die Abgaslauflänge (L) zwischen einer Rotationsachse des Abgasturboladers und einer Anströmfläche des motornächsten NO_{X}-Speicherkatalysators (24) höchstens 300 mm, insbesondere höchstens 250 mm, vorzugsweise höchstens 200 mm, besonders bevorzugt höchstens 150 mm beträgt.

7. Abgasanlage nach einem der vorhergehenden Ansprüche, **dadurch gekennzeichnet, dass** eine spezifische Leistung der Verbrennungskraftmaschine (12) mindestens 70, insbesondere mindestens 80, vorzugsweise mindestens 90, besonders bevorzugt mindestens 100 kW/l Motorhubvolumen beträgt.

8. Abgasanlage nach einem der vorhergehenden Ansprüche, **dadurch gekennzeichnet, dass** ein fahrzeuggewichtsspezifischer Hubraum der Verbrennungskraftmaschine (12) höchstens 1,2, insbesondere höchstens 1,1, vorzugsweise höchstens 1,0, besonders bevorzugt höchstens 0,9 dm³/1000 kg Fahrzeugleergewicht beträgt.

9. Abgasanlage nach einem der vorhergehenden Ansprüche, **dadurch gekennzeichnet, dass** der NOₓ-Speicherkatalysator (24) eine Speichermaterialmasse pro Katalysator aufweist, die derart ausgelegt ist, dass dieser mit einer eingelagerten NO₂-Masse von 200 mg/l Katalysatorvolumen einen NO_{X}-Speicherwirkungsgrad von höchstens 95 %, insbesondere höchstens 90 %, vorzugsweise höchstens 80 % aufweist.

10. Abgasanlage nach einem der vorhergehenden Ansprüche, **dadurch gekennzeichnet, dass** der NO_{X}-Speicherkatalysator (24) eine Speichermaterialmasse pro Katalysator aufweist, die derart ausgelegt ist, dass dieser mit einer eingelagerten NO₂-Masse von 500 mg/l Katalysatorvolumen einen NO_{X}-Speicherwirkungsgrad von höchstens 80 %, insbesondere höchstens 70 %, und mindestens 60 % aufweist.

11. Abgasanlage nach einem der vorhergehenden Ansprüche, **dadurch gekennzeichnet, dass** der NO_{X}-Speicherkatalysator (24) als Hauptspeicherkomponente Barium, Kalium, Caesium, Natrium und/oder Magnesium und/oder Verbindungen und/oder Salze von diesen aufweist, insbesondere Verbindungen und/oder Salze des Kaliums.

12. Abgasanlage nach Anspruch 11, **dadurch gekennzeichnet, dass** der NO_{X}-Speicherkatalysator (24) ein NO_{X}-Speichertemperaturfenster mit einer oberen Grenze von mindestens 550 °C, insbesondere mindestens 580 °C, vorzugsweise mindestens 610 °C, besonders bevorzugt mindestens 640 °C aufweist.

13. Abgasanlage nach einem der vorhergehenden Ansprüche, **dadurch gekennzeichnet, dass** der NO_{X}-Speicherkatalysator (24) einen Edelmetallgehalt von höchstens 3,59 g/dm³ (100 g/ft³), insbesondere höchstens 2,87 g/dm³ (80 g/ft³) aufweist.

14. Abgasanlage nach einem der vorhergehenden Ansprüche, **dadurch gekennzeichnet, dass** das die Abgasanlage (10) verlassende Abgas im Neuen Europäischen Fahrzyklus (NEFZ) bei einem ungeschädigten NO_{X}-Speicherkatalysator (24) und einem zeitlich gefeuerten Magerbetriebsanteil ohne Schubphasen mit Lambda ≥ 1,15 innerhalb einer Zeitspanne von mindestens 250 s, insbesondere mindestens 350 s, eine HC-Emission von weniger als 0,07 g/km und eine NO_{X}-Emission von weniger als 0,05 g/km aufweist.

15. Verfahren zur Behandlung eines Abgases einer fremdgezündeten und zumindest zeitweise magerbetriebenen Verbrennungskraftmaschine (12), wobei das Abgas durch mindestens einen in einem Abgasstrang (22) der Verbrennungskraftmaschine (12) motornah angeordneten NO_{X}-Speicherkatalysator (24) geführt wird, mit zumindest einem abgasangetriebenen Ladeluftverdichter (32) eine Verdichtung einer der Verbrennungskraftmaschine (12) zuzuführenden Luft bewirkt wird und eine hierfür erforderliche Energie durch Absenkung einer Energie des den NO_{X}-Speicherkatalysator (24) anströmenden Abgases aufgebracht wird, und wobei eine Abgaslauflänge (L) zwischen der Verbrennungskraftmaschine (12) und dem NO_{X}-Speicherkatalysator (24) in Abhängigkeit von der dem Abgas durch den Ladeluftverdichter (32) entzogenen Energiemenge gewählt wird.
